# DEMANDE DE BREVET EUROPEEN

(11) **EP 4 372 484 A1**
(43) Date de publication de la demande: **22.05.2024**
(21) Numéro de dépôt: 23203547.7
(22) Date de dépôt: 13.10.2023
(51) Int. Cl.: G04B 37/22

(54) **CARRURE CREUSE POUR UNE BOITE DE PIÈCE D'HORLOGERIE ET PROCÉDÉ DE FABRICATION CORRESPONDANT**

(30) Priorité: 16.11.2022 CH 13622022
(71) Demandeur: Richemont International S.A., 1752 Villars-sur-Glâne (CH)
(72) Inventeur: COLAS, Damien, 2854 Bassecourt (CH); GIRAUD, Damien, 90100 Joncherey (FR); CRETIN, Francis, 39220 Bois d'Amont (FR)
(74) Mandataire: e-Patent SA

(57) **Abrégé**

L'invention concerne une carrure (1), creuse, pour pièce d'horlogerie, comportant une paroi externe (2) et dépourvue de paroi latérale interne, la paroi externe (2) étant réalisée d'une seule pièce, concave en forme générale de C, et comprenant une portion centrale, dont la surface externe définit une bande de carrure, ainsi qu'un rebord inférieur (4) et un rebord supérieur (6) s'étendant en direction de l'intérieur, et dont l'un définit une ouverture (10) destinée à permettre l'insertion d'un mouvement horloger dans la carrure (1), cette dernière comportant une pluralité de piliers de renfort (14) s'étendant entre les rebords inférieur (4) et supérieur (6) et répartis de telle manière que l'essentiel de la surface interne de la paroi externe (2) reste accessible depuis l'intérieur de la carrure (1), et portant au moins un organe de fixation (12) d'un mouvement horloger. Un procédé de fabrication d'une telle carrure (1) est également décrit.

## Description

### Domaine technique

La présente invention concerne une carrure creuse, pour une boite de pièce d'horlogerie comportant une paroi externe réalisée d'une seule pièce, concave en forme générale de C, et comprenant une portion centrale, dont la surface externe définit une bande de carrure, ainsi que des portions inférieure et supérieure, définissant un rebord inférieur et un rebord supérieur de la carrure, s'étendant tous deux en direction de l'intérieur de cette dernière, et dont au moins l'un définit une ouverture destinée à permettre l'insertion d'un mouvement horloger dans la carrure.

### Etat de la technique

Des carrures creuses pour boites de pièces d'horlogerie sont déjà connues dans l'art antérieur.

La demande de brevet CH664251A3 décrit par exemple une boite pour pièce d'horlogerie comprenant une carrure évidée pour permettre l'utilisation d'une quantité réduite de matière première, ce qui est particulièrement pertinent lorsque la carrure est réalisée en or. Cette carrure est fabriquée par des techniques de fabrication et d'usinage conventionnelles. La boite correspondante comporte en outre une pièce intermédiaire d'encageage partiellement insérée dans la carrure, entre ses parois inférieure et supérieure, et maintenue en place par un ou plusieurs verrous, pour à la fois renforcer la carrure, en particulier suivant la direction de son épaisseur et définir un support pour le mouvement horloger. La pièce intermédiaire d'encageage permet ainsi d'isoler le mouvement horloger de la cavité de la carrure et de définir une boite présentant une enveloppe fermée similaire à celle d'une boite conventionnelle non pourvue d'une cavité.

Le brevet EP2485099B1 décrit une carrure, pour une boite de pièce d'horlogerie, réalisée par une technique de fabrication additive et présentant une construction alternative. Un but du procédé de fabrication correspondant consiste à trouver un bon compromis pour la quantité de matière utilisée lors de la réalisation de la carrure, afin d'en utiliser le moins possible par la mise en oeuvre d'une cavité dans la carrure, tout en garantissant une rigidité suffisante de cette dernière. Ainsi, un modèle 3D de la carrure est tout d'abord réalisé avant que la carrure ne soit effectivement fabriquée, couche par couche, par fabrication additive. Grâce à cette approche, il est possible de fabriquer une carrure comprenant des parois latérale interne, latérale externe, inférieure et supérieure, toutes réalisées d'une seule pièce et entre lesquelles est définie une cavité. L'assemblage d'une pièce intermédiaire d'encageage comme décrit dans le document précédent n'est donc plus nécessaire, grâce à la présence de la paroi latérale interne, et la carrure seule présente une robustesse équivalente à celle de la boite de la demande CH664251A3, c'est-à-dire de la carrure correspondante lorsqu'elle est associée à la pièce intermédiaire d'encageage. Selon un mode de réalisation particulier, il est prévu d'ajouter en outre des structures de support, optionnelles, s'étendant entre les parois inférieure et supérieure pour renforcer encore davantage la carrure suivant la direction de son épaisseur, ces structures étant réparties tout autour de la carrure de manière plus ou moins régulière.

Toutefois, selon l'approche suivie par ce brevet, il est nécessaire de prévoir au moins deux trous d'évacuation, dans la carrure, pour permettre un accès à sa cavité depuis l'extérieur, afin d'en extraire d'éventuels résidus de fabrication dont la présence est directement liée à la nature du procédé de fabrication, notamment par aspiration ou par injection d'air ou autre gaz. Ces trous d'évacuation doivent ensuite être bouchés et masqués, par mise en oeuvre d'une étape spécifique. Comme mentionné au paragraphe [0035] de ce brevet, une telle étape d'extraction des résidus de fabrication permet de retirer la poudre (utilisée dans la fabrication additive) qui n'est pas fixée sur la carrure et qui serait donc susceptible d'interférer avec le mouvement horloger. On comprend bien que la mise en contact du mouvement horloger avec de la poudre pourrait non seulement nuire à son bon fonctionnement, mais pourrait également lui causer des dommages.

Dans le cas de cette construction, l'accès à la cavité de la carrure est malaisé, en tout cas un accès direct est impossible d'où la nécessité de prévoir les trous d'évacuation pour procéder à la suppression des résidus de fabrication, mais le risque d'interférence de résidus de poudre avec le mouvement horloger est neutralisé par la présence de la paroi latérale interne, ainsi que par le fait que les trous d'évacuation soient bouchés après la fabrication de la carrure.

La réalisation d'autres types de boites de montre par fabrication additive est déjà connue par ailleurs, avec des formes de carrures relativement différentes de celle mentionnée plus haut, en préambule, et/ou parfois en relation avec un procédé de fabrication globalement différent, dont certaines étapes supplémentaires permettent de répondre aux problèmes de résidus de fabrication de manière différente à ce qui vient d'être décrit.

Ainsi, par exemple, le site internet Thingiverse.com, "Pocket watch case by Starno - Thingiverse" (https://www.thingiverse.com/thing:1812) présente une boite pour montre de poche électronique réalisée par fabrication additive. Cette boite présente une architecture assez spécifique et éloignée des boites de montres conventionnelles, contrairement à l'objet de la présente invention. En particulier, sa carrure comprend une paroi externe simple, définissant une bande de carrure, et portant de son côté interne, une pluralité de bossages creux, pour encastrer un PCB portant le mouvement électronique, et de renforts, notamment dans une région portant une charnière pour une lunette pivotante. Il apparait de la construction spécifique de cette carrure, relativement aérée mais éloignée de celle qui nous intéresse ici, que des résidus de fabrication éventuels pourraient être facilement retirés puisque toute la surface interne de la carrure est accessible, y compris à l'intérieur des bossages creux. Dans tous les cas, le problème des résidus ne se pose pas ici puisque non seulement la boite ne semble même pas être étanche, ce qui implique que d'autres saletés ou débris peuvent y entrer par la suite, mais, en outre, le mouvement électronique associé étant dépourvu de pièce mécanique mobile, le risque de dommages qui seraient causés au mouvement par des résidus de poudre est tout simplement inexistant.

Un autre exemple d'utilisation de techniques de fabrication additive pour réaliser une boite de montre est fourni dans la publication EP3572209A1. Ce document décrit en effet la fabrication d'un renfort, présentant une structure ajourée, par impression 3D avant de le noyer dans une matrice en matière synthétique. Si la forme de la carrure décrite et illustrée dans ce document est plus conventionnelle que la précédente, le procédé correspondant est relativement spécifique puisqu'il vise à obtenir une carrure composite, comme précisé dès le titre de cette publication, et non une carrure creuse comme c'est le cas de la présente invention. Ainsi, dans la mesure où le renfort réalisé par fabrication additive est ensuite noyé dans la matière synthétique, non seulement la carrure qui en résulte est de ce fait dépourvue de tout creux mais, en outre, un mouvement horloger ensuite disposé dans cette carrure ne serait soumis à aucun risque de contamination par des résidus de poudre puisque de tels résidus seraient également noyés dans la matrice en matière synthétique. La densité et le coût des matières synthétiques employées n'incitent pas à économiser la quantité de matière utilisée et donc à réaliser une carrure qui serait creuse. Finalement, un tel procédé est limité à la réalisation de boites de montres dont les surfaces externes, visibles pour le porteur, présentent de toute façon un aspect plastique, ce qui en limite les applications possibles.

### Divulgation de l'invention

Un but principal de la présente invention est de proposer une carrure, pour une boite de pièce d'horlogerie, de construction alternative à celles des carrures qui viennent d'être mentionnées, présentant une répartition optimale de la matière première utilisée pour une rigidité et une robustesse données, et susceptible d'être fabriquée par la mise en oeuvre d'un procédé de fabrication flexible et de complexité limitée.

A cet effet, la présente invention concerne plus particulièrement une carrure répondant aux caractéristiques énoncées plus haut et caractérisée
par le fait qu'elle comporte une pluralité de piliers de renfort s'étendant entre les rebords inférieur et supérieur et répartis de telle manière que l'essentiel de la surface interne de la paroi externe reste accessible depuis l'intérieur de la carrure, et
par le fait qu'elle porte au moins un organe de fixation destiné à permettre l'établissement d'une liaison mécanique entre la carrure et le mouvement horloger.

Grâce à ces caractéristiques, le nombre de piliers de renfort, leur forme, leur dimensionnement et leur répartition dans la carrure peuvent être adaptés pour assurer les propriétés mécaniques souhaitées pour la carrure, sans pour autant devoir prévoir la présence d'une paroi latérale interne. L'absence de cette paroi latérale interne permet d'améliorer les conditions d'accès à l'intérieur de la cavité de la carrure, et donc les conditions de nettoyage des surfaces internes, notamment celle de la paroi externe, après l'opération de fabrication additive qui permet l'obtention de la structure monolithique de la carrure. Ainsi, les conditions de traitement de la carrure obtenue après l'opération de fabrication additive, en vue de supprimer les résidus de fabrication, peuvent être optimisées pour assurer que la carrure terminée ne comporte aucun résidu de fabrication qui serait susceptible de se détacher d'elle en réponse à la survenue d'un choc ou de vibrations, comme cela pourrait être le cas avec la carrure décrite dans le brevet EP2485099B1.

De manière avantageuse, on peut prévoir que l'organe de fixation ou les organes de fixation destinés à permettre la fixation du mouvement horloger à la carrure soient réalisés d'une pièce avec la paroi externe.

Selon un mode de réalisation préféré de la présente invention, on peut prévoir qu'entre 25% et 70% des rayons s'étendant dans un plan médian de la carrure, depuis son centre vers l'extérieur, présentent une unique intersection avec la carrure, située au niveau de la portion centrale de la paroi externe.

Par ailleurs, on peut prévoir que l'ouverture pour l'insertion du mouvement horloger soit définie par le rebord supérieur, l'organe de fixation du mouvement horloger s'étendant depuis le rebord inférieur en direction de l'intérieur de la carrure.

Dans ce cas, on peut prévoir que le rebord supérieur définisse une surface de guidage destinée à coopérer avec le mouvement horloger et/ou avec un cadran à proximité ou au niveau de l'ouverture.

Selon un mode de réalisation particulièrement avantageux, on peut prévoir
que le rebord supérieur comprenne une surface d'appui s'étendant sur 360 degrés et destinée à définir au moins indirectement un appui pour une glace de la boite de pièce d'horlogerie, et
qu'au moins une partie des piliers de renfort s'étende au moins partiellement en regard de la surface d'appui suivant la direction de l'épaisseur de la carrure.

En effet, la mise en place de la glace peut impliquer l'application d'une pression de montage importante sur la carrure, et la glace est susceptible de subir des chocs lors du porter de la pièce d'horlogerie correspondante, ces chocs entrainant l'application de pressions parfois importantes sur la carrure. Aussi, le fait qu'au moins une partie des piliers de renfort s'étendent au moins partiellement en regard de la surface d'appui de la glace sur la carrure permet de renforcer cette dernière de manière particulièrement judicieuse.

De manière générale, on peut prévoir que la carrure comporte en outre des organes de fixation d'un bracelet réalisés d'une pièce avec la paroi externe et, préférablement un organe de fixation d'un fond de boite et/ou une surface d'appui pour une lunette.

La présente invention concerne également une boite de pièce d'horlogerie comportant une carrure répondant à tout ou partie des caractéristiques qui viennent d'être mentionnées, ainsi qu'une pièce d'horlogerie comportant une telle carrure, préférablement lorsque la carrure loge directement un mouvement horloger, sans interposition d'un cercle d'emboitage.

En alternative, lorsque le mouvement horloger est rendu solidaire de la carrure par l'intermédiaire d'un cercle d'emboitage, on peut avantageusement prévoir que le cercle d'emboitage remplisse une fonction d'assemblage du mouvement horloger à la carrure sans définir une double butée, directement ou indirectement, pour les rebords inférieur et supérieur suivant la direction de l'épaisseur de la carrure. En effet, une telle mesure permet de simplifier l'assemblage du mouvement horloger à la carrure sans pour autant porter préjudice à la robustesse de la carrure, comme signalé précédemment. Par ailleurs, il est possible de prévoir que le cercle d'emboitage remplisse un rôle d'amortisseur de chocs pour le mouvement horloger.

Par ailleurs, la présente invention concerne également un procédé de fabrication d'une carrure répondant aux caractéristiques ci-dessus comprenant les étapes consistant à
a) réaliser un modèle 3D de la carrure comprenant une paroi externe et dépourvu de paroi latérale interne, la paroi externe étant réalisée d'une seule pièce, concave en forme générale de C, et comprenant une portion centrale, dont la surface externe définit une bande de carrure, ainsi que des portions inférieure et supérieure, définissant un rebord inférieur et un rebord supérieur de la carrure, s'étendant tous deux en direction de l'intérieur de cette dernière, et dont au moins l'un définit une ouverture destinée à permettre l'insertion d'un mouvement horloger dans la carrure, le modèle 3D comportant au moins un organe de fixation destiné à permettre l'établissement d'une liaison mécanique entre la carrure et le mouvement horloger, ainsi qu'une pluralité de piliers de renfort s'étendant entre les rebords inférieur et supérieur et répartis de telle manière que l'essentiel de la surface interne de la paroi externe reste accessible depuis l'intérieur de la carrure,
b) fabriquer la carrure en mettant en oeuvre au moins une opération de fabrication additive,
c) mettre en oeuvre au moins une opération de nettoyage visant à supprimer tout résidu de fabrication aussi bien de la surface externe que de la surface interne de la paroi externe de la carrure.

On peut alors avantageusement prévoir que l'étape c) comprenne au moins une opération de microbillage et, préférablement, au moins une opération de polissage visant à supprimer tout résidu de fabrication éventuel sur les surfaces interne et externe de la paroi externe, notamment qui serait susceptible de se détacher de la carrure en réponse à la survenue d'un choc ou de vibrations. L'étape c) peut encore comporter une opération de nettoyage par flux de gaz pulsé et/ou par bain à ultrasons.

Par ailleurs, on peut prévoir, lorsque la carrure est réalisée en métal, que son procédé de fabrication comporte une ou plusieurs opérations supplémentaires consistant à appliquer un traitement de finition à la carrure obtenue par la mise en oeuvre de l'étape c) pris dans le groupe comprenant le polissage mécanique, par attaque chimique ou par laser, le satinage, le brossage, le sablage, la croissance d'une couche chimique ou électrolytique (par exemple un plaquage or), un traitement thermique, préférablement de type HIP et/ou de détente et/ou de durcissement.

On peut également prévoir que le procédé comporte, entre les étapes b) et c), une opération de reprise par usinage ou meulage de la paroi externe de la carrure obtenue par la mise en oeuvre de l'opération de fabrication additive.

Par ailleurs, on peut prévoir, lorsque l'étape b) comprend l'utilisation d'un liant,
que le modèle conçu à l'étape a) présente des dimensions supérieures aux dimensions finales souhaitées pour la carrure, et
que l'étape b) comporte des opérations de déliantage et de frittage.

### Brève description des dessins

D'autres caractéristiques et avantages de la présente invention apparaîtront plus clairement à la lecture de la description détaillée d'un mode de réalisation préféré qui suit, faite en référence aux dessins annexés donnés à titre d'exemples non limitatifs et dans lesquels:
- la figure 1 représente une vue générale en perspective simplifiée d'une carrure pour une boite de pièce d'horlogerie selon un mode de réalisation préféré de la présente invention;
- la figure 2 représente une vue de face simplifiée du côté fond de la carrure de la figure 1 ;
- la figure 3 représente une vue simplifiée en perspective et en coupe selon un plan de coupe parallèle au plan général de la carrure de la figure 1, celle-ci étant observée depuis son côté fond;
- la figure 4 représente une vue simplifiée en perspective et en coupe transversale de la carrure de la figure 1, et
- la figure 5 représente des diagrammes schématiques illustrant des exemples de variantes de réalisation de la carrure selon la présente invention.

### Mode(s) de réalisation de l'invention

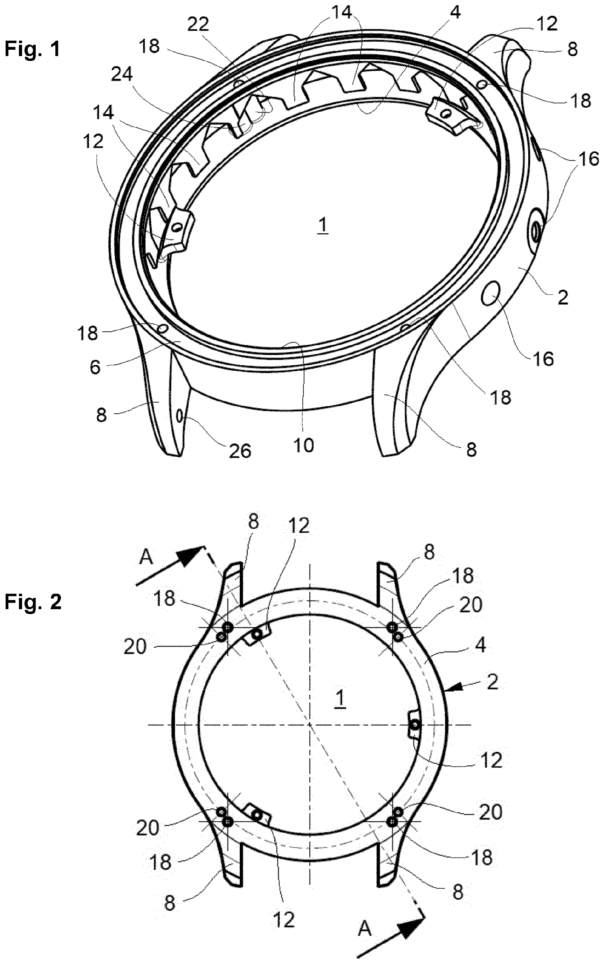

La figure 1 représente une vue générale en perspective simplifiée d'une carrure 1 pour une boite de pièce d'horlogerie selon un mode de réalisation préféré de la présente invention, ici pour une montre-bracelet à titre illustratif non limitatif.

En particulier, conformément à la présente invention, la carrure 1 est creuse. Plus précisément, la carrure 1 comporte une paroi externe 2 et est dépourvue de paroi latérale interne, la paroi externe 2 étant réalisée d'une seule pièce, concave en forme générale de C, et comprenant une portion centrale, dont la surface externe définit une bande de carrure. La paroi externe 2 comporte également des portions inférieure et supérieure, définissant un rebord inférieur 4 et un rebord supérieur 6 de la carrure 1, s'étendant depuis la portion centrale en direction de l'intérieur de la carrure 1, ainsi que des organes de fixation d'un bracelet, ici deux paires de cornes 8 à titre illustratif non limitatif. Par paroi latérale interne, il faut comprendre une paroi qui joindrait les rebords inférieur 4 et supérieur 6 dans la région de leurs périphéries internes, en s'étendant sensiblement sur toute la périphérie de la carrure 1, c'est-à-dire en fermant sensiblement la paroi externe 2 à l'intérieur de la carrure 1.

Le rebord supérieur 6 définit une ouverture 10 destinée à permettre l'insertion d'un mouvement horloger à l'intérieur de la carrure 1, de manière conventionnelle. L'ouverture 10 peut éventuellement définir une surface de guidage destinée à coopérer avec le mouvement horloger et/ou avec un cadran pour le positionner correctement dans la carrure 1 dans les directions comprises dans le plan général de cette dernière et/ou suivant la direction de son épaisseur.

De manière préférée, la carrure 1 comporte également au moins un organe de fixation 12 du mouvement horloger, ici trois pattes de fixation percées pour recevoir des vis de fixation (non représentées). De manière non limitative, les pattes de fixation s'étendent ici à partir du rebord inférieur 4 de la carrure 1. Bien entendu, l'homme du métier pourra prévoir une autre construction pour les organes de fixation sans pour autant sortir du cadre de l'invention tel que défini par les revendications annexées.

La face externe du rebord supérieur 6 de la carrure 1 présente une forme en U définissant un logement pour une lunette (non représentée) destinée à permettre l'assemblage d'une glace sur la carrure 1, à titre illustratif non limitatif. En alternative, l'homme du métier pourra prévoir un assemblage direct d'une glace sur la carrure, auquel cas le logement du rebord supérieur 6 pourrait recevoir un joint d'étanchéité, sans pour autant sortir du cadre de l'invention tel que défini par les revendications annexées.

On constate sur la figure 1 que la carrure 1 comporte également une pluralité de piliers de renfort 14, répartis tout autour de la carrure 1 de manière relativement régulière ici. Chaque pilier de renfort 14 présente une base sensiblement rectangulaire s'étendant depuis le rebord inférieur 4 en direction du rebord supérieur 6, et joignant ce dernier par l'intermédiaire d'une portion évasée. De manière préférée mais non limitative, les portions évasées de piliers de renfort 14 adjacents se rejoignent pour définir des ouvertures en arche pointue entre chaque paire de piliers de renfort 14 adjacents.

Bien entendu, l'homme du métier ne rencontrera pas de difficulté particulière pour réaliser des piliers de renfort de formes différentes, par exemple en utilisant une méthode ou un logiciel d'optimisation topologique, sans pour autant sortir du cadre de la présente invention tel que défini par les revendications annexées.

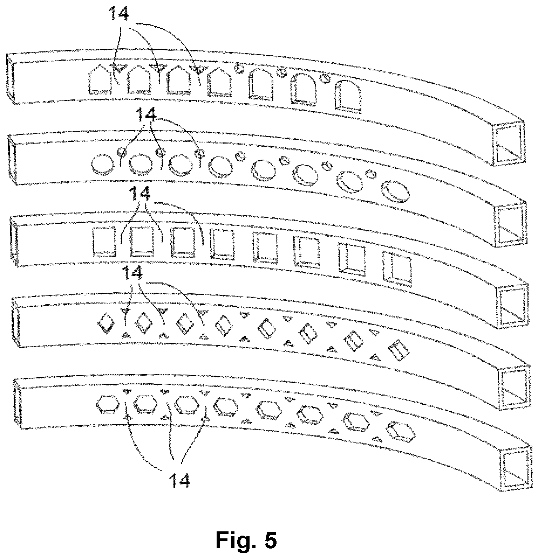

La figure 5 représente des diagrammes schématiques illustrant des exemples de variantes de réalisation pour les piliers de renfort 14, certaines variantes étant plus adaptées que d'autres en fonction du procédé de fabrication retenu pour fabriquer la carrure 1, comme cela sera décrit plus loin. Il apparait de la figure 5 que la géométrie des piliers de renfort 14 peut être variée quasiment à l'infini. De plus, il est également envisageable de prévoir que différents piliers de renfort d'une même carrure présentent des formes différentes sans pour autant sortir du cadre de l'invention tel que défini par les revendications annexées.

Revenant à la figure 1, il apparait également que la carrure 1 comprend plusieurs trous qui peuvent être réalisés directement lors du procédé de fabrication additive de la carrure 1 ou, en alternative, par usinage après coup.

La bande de carrure comporte plusieurs trous 16 présentant des orientations sensiblement radiales pour définir des passages pour des organes de commande externes, comme une ou plusieurs couronnes, un ou plusieurs poussoirs et/ou un ou plusieurs correcteurs.

De plus, quatre trous 18 sont ménagés dans le logement de lunette du rebord supérieur 6, à titre illustratif non limitatif, ces trous s'étendant sur toute l'épaisseur de la carrure 1 pour déboucher en dehors du rebord inférieur 4, comme cela ressort de la figure 2 qui représente une vue de face de la carrure 1 depuis son côté fond. On peut ainsi prévoir, par exemple, que des pieds-vis (non représentés) soient solidaires de la lunette et coopèrent avec des vis (non représentées) qui seraient insérées dans la carrure 1, au travers du rebord inférieur 4, par son côté fond.

Par ailleurs, quatre trous 20 supplémentaires sont ménagés dans le rebord inférieur 4, ici à proximité des trous 18 à titre illustratif non limitatif, ces trous 20 étant destinés à permettre l'assemblage d'un fond (non représenté) sur la carrure 1, par vissage.

On constate également sur la figure 1 que des tubes 22, 24 sont formés, entre les rebords inférieur 4 et supérieur 6, en correspondance avec les trous 18, 20, afin que ces derniers qui débouchent sur l'extérieur ne puissent pas communiquer avec l'espace interne de la carrure 1.

Des trous 26 sont également prévus dans les cornes 8, à titre illustratif non limitatif, pour permettre l'assemblage d'un bracelet sur la carrure 1 avec des barrettes conventionnelles. Bien entendu, d'autres modes de liaison sont envisageables entre le bracelet et la carrure 1 sans sortir du cadre de l'invention tel que défini par les revendications annexées.

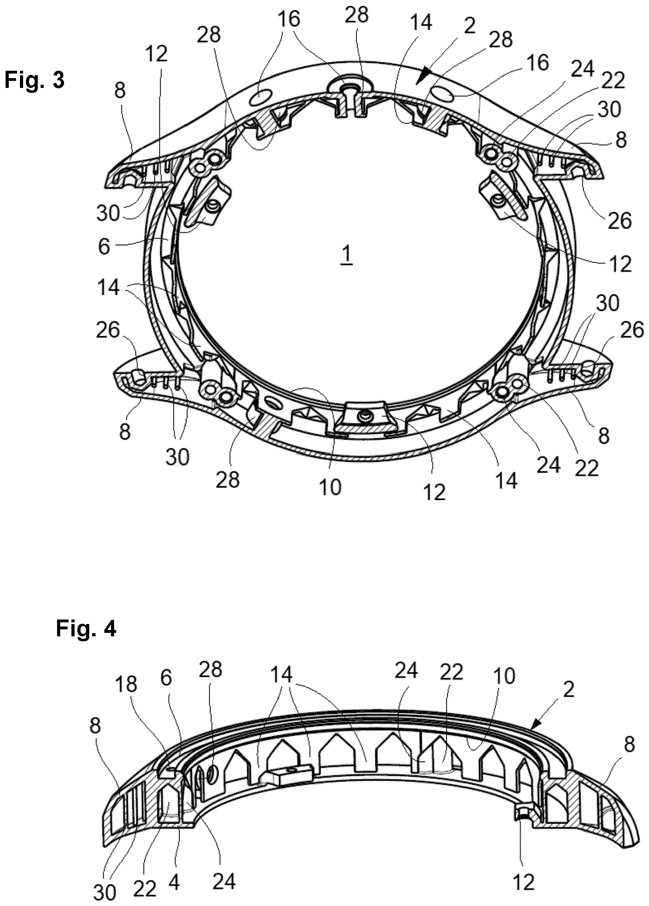

Certains détails particuliers de construction de la carrure 1 apparaissent plus clairement sur les vues en coupes des figures 3 et 4. La figure 3 représente une vue en coupe simplifiée, selon un plan parallèle au plan général de la carrure 1 et situé légèrement au-dessus du rebord inférieur 4, tandis que la figure 4 représente une vue en coupe simplifiée selon le plan transversal repéré par la ligne A-A sur la figure 2.

Il ressort en particulier de la figure 3 que des tubes 28 sont également formés en regard des trous 16 pour guider les différents organes de commande externes au travers de la carrure 1, jusqu'au mouvement horloger.

Les cornes 8 sont avantageusement creuses et leurs trous 26 sont par conséquent borgnes pour éviter l'entrée d'eau ou de saletés à l'intérieur de la carrure 1, étant donné que cavités formées à l'intérieur des cornes 8 communiquent avec la cavité de la carrure 1. En outre, on note que des piliers de renfort 30 supplémentaires sont avantageusement prévus à l'intérieur des cornes 8 pour les rendre plus robustes. Bien entendu, l'homme du métier pourra prévoir, en alternative, que les cornes sont pleines sans pour autant sortir du cadre de l'invention tel que défini par les revendications annexées.

On constate sur la figure 3, et encore plus clairement sur la figure 4, que les portions évasées des piliers de renfort 14 s'élargissent non seulement suivant une direction tangentielle, en se rapprochant du rebord supérieur 6, mais également suivant une direction radiale.

Ainsi, non seulement une arche est formée entre deux piliers de renfort 14 adjacents suivant une direction tangentielle, mais une deuxième arche est formée entre chaque pilier de renfort 14 et la portion centrale de la paroi externe 2 de la carrure 1. Chacune des deuxièmes arches ainsi formées présente son sommet sensiblement en regard du milieu du logement de lunette du rebord supérieur 6. Comme signalé précédemment, la mise en place de la glace peut impliquer l'application d'une pression de montage importante sur la carrure 1, et la glace est susceptible de subir des chocs lors du porter de la pièce d'horlogerie correspondante, ces chocs entrainant l'application de pressions parfois importantes sur la carrure 1. Aussi, le fait qu'au moins une partie des piliers de renforts 14 s'étendent au moins partiellement en regard de la surface d'appui de la glace sur la carrure 1, c'est-à-dire en regard du logement de lunette défini dans le rebord supérieur 6 ici, permet de renforcer la carrure 1 de manière particulièrement judicieuse.

On notera que la géométrie des différents piliers de renfort 14 (et éventuellement 30) peut être variable pour prendre en compte certaines contraintes locales spécifiques. Ainsi, certains piliers de renfort 14 proches de tubes 22, 24 peuvent présenter une largeur réduite par rapport à la largeur moyenne, tandis que d'autres piliers de renfort 14 peuvent être situés en regard de tubes 28 et présenter une largeur supérieure à la largeur moyenne pour permettre la réalisation d'un trou communiquant avec l'intérieur du tube correspondant.

On notera également que différentes régions de la carrure 1 peuvent présenter différentes épaisseurs de matière pour prendre en compte l'existence de contraintes mécaniques locales spécifiques, notamment lors du porter de la pièce d'horlogerie finalement obtenue.

Enfin, il ressort de l'ensemble des figures que grâce aux caractéristiques de la présente invention, notamment grâce à l'absence d'une paroi latérale interne, il est possible de réaliser une carrure 1 telle qu'entre 25% et 70% des rayons s'étendant dans un plan médian de la carrure 1, depuis son centre vers l'extérieur, présentent une unique intersection avec la carrure 1, située au niveau de la portion centrale de sa paroi externe 2, en fonction du nombre de piliers de renfort 14 prévus et de leurs dimensions, ainsi qu'en fonction du mode de fixation d'une lunette éventuellement prévue et du nombre d'organes de commande externes prévus.

Une telle caractéristique permet de préserver un accès à quasiment toute la surface interne de la carrure 1 à partir de son espace intérieur, notamment pour l'examiner et procéder à son nettoyage après sa fabrication par une opération de fabrication additive. Ainsi, les conditions de traitement de la carrure 1 obtenue après l'opération de fabrication additive, en vue de supprimer les résidus de fabrication, peuvent être optimisées pour assurer que la carrure terminée ne comporte aucun résidu de fabrication qui serait susceptible de se détacher d'elle en réponse à la survenue d'un choc ou de vibrations, ce qui permet donc de s'affranchir de la nécessité de réaliser une paroi latérale interne pour isoler la cavité de la carrure du mouvement horloger.

Par conséquent, la présente invention permet d'optimiser encore davantage la quantité de matière première utilisée pour fabriquer une carrure 1, d'apparence extérieure conventionnelle, par mise en oeuvre d'une opération de fabrication additive, en optimisant le nombre, la répartition et les dimensions des piliers de renfort 14 tout en maintenant un accès à la surface interne de sa paroi externe 2.

La présente invention concerne également un procédé de fabrication de la carrure 1 répondant aux caractéristiques qui viennent d'être énoncées.

Un tel procédé comprend avantageusement les étapes consistant à
a) réaliser un modèle 3D de la carrure 1, avec un logiciel de CAD, le modèle comprenant une paroi externe 2 et étant dépourvu de paroi latérale interne, la paroi externe 2 étant réalisée d'une seule pièce, concave en forme générale de C, et comprenant une portion centrale, dont la surface externe définit une bande de carrure, ainsi que des portions inférieure et supérieure, définissant un rebord inférieur 4 et un rebord supérieur 6 de la carrure 1, s'étendant tous deux en direction de l'intérieur de cette dernière, et dont au moins l'un définit une ouverture 10 destinée à permettre l'insertion d'un mouvement horloger dans la carrure 1, le modèle 3D comportant au moins un organe de fixation 12 destiné à permettre l'établissement d'une liaison mécanique entre la carrure 1 et le mouvement horloger, ainsi qu'une pluralité de piliers de renfort 14 s'étendant entre les rebords inférieur 4 et supérieur 6 et répartis de telle manière que l'essentiel de la surface interne de la paroi externe 2 reste accessible depuis l'intérieur de la carrure 1,
b) fabriquer la carrure 1 en mettant en oeuvre au moins une opération de fabrication additive,
c) mettre en oeuvre au moins une opération de nettoyage visant à supprimer tout résidu de fabrication aussi bien de la surface externe que de la surface interne de la paroi externe 2 de la carrure 1.

De manière générale, les techniques de fabrication additive sont déjà connues, comme cela ressort par exemple du brevet EP2485099B1 précité, et l'homme du métier ne rencontrera pas de difficulté particulière pour les appliquer à la mise en oeuvre des étapes a) et b) ci-dessus.

Ainsi, l'homme du métier pourra choisir la technique la plus adaptée au modèle 3D de la carrure qu'il souhaitera fabriquer, notamment en fonction de certaines géométries spécifiques comme la forme des piliers de renfort ou encore en fonction de la nature du matériau souhaité, préférablement dans le groupe comprenant les procédés DMLS (Direct Metal Laser Sintering), SLM (Selective Laser Melting), ALM Laser (Additive Layer Manufacturing), Mold Jet (par exemple Tritone ^{®}), Metal Jetting (proposée notamment par la société Xerox ^{®}), Binder Jet, 3D screen printing, les techniques de lithographie (stéréolithographie, Direct Light Processing), ou encore les dépôts directs de matière par projection de poudre ou de fils. Typiquement, la croissance d'une pièce est préférablement réalisée suivant la direction de sa plus faible dimension, soit suivant la direction de l'épaisseur pour une carrure. En considérant que la direction de la croissance définit un axe vertical, on notera que certaines techniques ne permettent pas, par exemple, de réaliser des arches dont le sommet serait sensiblement horizontal ou plat (voire avec des pentes inférieures à 45 degrés). Ainsi, en fonction de la géométrie de la carrure à réaliser, l'homme du métier pourra choisir toute technique permettant la réalisation de la forme souhaitée. On notera toutefois que certaines méthodes permettent malgré tout la réalisation de structures par la mise en oeuvre de méthodes qui ne le permettraient pas normalement, comme des arches avec des angles inférieurs à 45 degrés par rapport à l'horizontale. Dans ce cas, en effet, il est envisageable de prévoir des supports sacrificiels pour soutenir les arches et destinés à être supprimés ultérieurement, par exemple par usinage. Par ailleurs, certaines techniques via des modules de type Aerosint ^{®} (consistant à réaliser un frittage multi-matières) permettent de travailler avec des poudres sacrificielles. Dans ce cas, plusieurs poudres de natures différentes sont utilisées, dont au moins une, sacrificielle, pour réaliser des supports sacrificiels qui sont alors destinés à être supprimés ultérieurement, par suppression de tout ou partie des structures réalisées avec la poudre sacrificielle, par exemple par attaque chimique. A titre d'exemple non limitatif, on peut réaliser un frittage avec des poudres d'acier et de cuivre, les parties réalisées avec la poudre de cuivre étant supprimées ensuite par attaque chimique.

La carrure 1 pourra être réalisée par mise en oeuvre du procédé ci-dessus en tout matériau adapté, notamment en métal précieux pour des questions principalement liées aux coûts, par exemple en or, qu'il soit blanc, jaune, gris, rose, rouge ou autre, en platine, en palladium, etc..., en métal "technique" pour des questions principalement liées à la légèreté, par exemple en titane, notamment de grade 5, en acier inoxydable, notamment 316L, etc..., voire en céramique.

Dans le cas d'une fabrication impliquant l'utilisation d'un liant, l'opération de fabrication additive visera à l'obtention d'une pièce "verte", c'est-à-dire contenant de la poudre céramique mélangée au liant, de dimensions légèrement supérieures aux dimensions souhaitées pour la carrure finalement obtenue, et sera suivie d'une opération de déliantage et d'une opération de frittage, de manière connue.

De manière préférée, le procédé comporte, entre les étapes b) et c) une opération de reprise par usinage ou meulage (par exemple par CNC) de la paroi externe de la carrure obtenue par la mise en oeuvre de l'opération de fabrication additive. Une telle opération permet de limiter l'existence de résidus de fabrication liés à l'utilisation d'une technique de fabrication additive. Ainsi, la paroi externe 2 de la carrure 1 obtenue par mise en oeuvre de l'opération de fabrication additive présente avantageusement une épaisseur générale supérieure à celle qu'elle présente sur la carrure finie, aussi bien au niveau de sa portion centrale que de ses portions inférieure et supérieure.

Ainsi, on peut par exemple prévoir que pour une paroi externe 2 présentant une épaisseur finale de l'ordre de 0.4 à 1.5 mm, préférablement de l'ordre de 0.4 à 1 mm, la paroi externe obtenue après l'opération de fabrication additive présente une épaisseur de l'ordre de 0.7 à 1.8 mm d'épaisseur, la reprise par usinage résultant en une réduction de l'épaisseur de l'ordre de 0.2 à 0.5 mm. De manière préférée, on peut prévoir une réduction de l'épaisseur de l'ordre de 0.3 mm, pour passer d'une épaisseur de l'ordre de 0.7 mm à 1 mm, après fabrication additive, à une épaisseur de l'ordre de 0.4 mm à 0.7 mm, après reprise par usinage. En effet, une épaisseur finale d'au moins 0.4 mm, préférablement au moins 0.5 mm, permet des opérations de service après-vente ultérieures qui impliqueraient une réduction de l'épaisseur de la carrure, sans pour autant nuire à l'intégrité de cette dernière. De manière différente, les éléments internes de la carrure, notamment les piliers de renfort, peuvent présenter des épaisseurs plus faibles que celle de la paroi externe en fin d'opération de fabrication additive, par exemple de l'ordre de 0.2 mm à 0.4 mm.

L'étape c) comporte encore préférablement une opération de microbillage, appliquée au moins aux surfaces internes de la carrure obtenue après l'opération de fabrication additive, ou après la reprise par usinage le cas échéant, suivie d'une opération d'adoucissement des arêtes, avant la mise en oeuvre de l'opération de nettoyage en tant que telle.

Pour ce qui concerne l'opération de nettoyage, elle consiste préférablement en un polissage par mise en oeuvre d'un mouvement oscillatoire entre la carrure à traiter et un produit de polissage, à l'intérieur d'une cuve adaptée qui présente elle-même un mouvement oscillatoire par rapport à la carrure. Un tel procédé, particulièrement avantageux et efficace pour retirer tout résidu de fabrication éventuel, est décrit en détail dans le brevet EP 1378322 B1, au nom de la société BESTinCLASS SA, et auquel l'homme du métier pourra se référer. Le nettoyage peut encore comporter une opération de nettoyage par flux de gaz pulsé et/ou par bain à ultrasons.

En alternative ou en complément, on pourrait prévoir le dépôt d'une résine sur toutes les surfaces internes de la carrure 1 pour prévenir la libération de résidus de fabrication éventuels en cas de choc ou de vibrations.

Après son nettoyage, la carrure peut encore être traitée avec tout traitement de terminaison connu et adapté, notamment un polissage mécanique, par attaque chimique ou par laser, un satinage, un brossage, un sablage, la croissance d'une couche chimique ou électrolytique, un traitement thermique, préférablement de type HIP (Hot Isostatic Pressing) plus particulièrement adapté pour l'or jaune ou l'or rouge mais également envisageable pour d'autres métaux, et/ou un traitement thermique de détente et/ou de durcissement. A titre d'exemple illustratif non limitatif, pour traiter une carrure en or jaune ou en or rouge, on pourra appliquer un traitement HIP de 30 min à 800°C sous une pression d'argon de 1400 bars.

Grâce aux caractéristiques qui viennent d'être présentées, il est possible de réaliser une carrure présentant une apparence extérieure identique à celle d'une carrure qui serait réalisée par des techniques de fabrication conventionnelles, notamment par électroformage et/ou usinage, mais qui est évidée, de telle manière que sa structure interne soit optimisée pour permettre une économie substantielle de matière première, tout en garantissant des propriétés mécaniques adaptées, notamment en termes de rigidité et de robustesse, à elle seule, c'est-à-dire sans qu'il soit nécessaire de lui associer un cercle d'emboitage qui serait inséré entre ses parois inférieure et supérieure pour la renforcer en définissant une double butée pour ces parois, directement ou indirectement, suivant la direction de l'épaisseur de la carrure.

La description qui précède s'attache à décrire un mode de réalisation particulier à titre d'illustration non limitative et, l'invention n'est pas limitée à la mise en oeuvre de certaines caractéristiques particulières qui viennent d'être décrites, notamment pour ce qui concerne la présence d'éléments fonctionnels additionnels (cornes, trous, logement pour joint de glace ou lunette), leurs formes et leur nombre (par exemple, organes de fixation du mouvement horloger), ou encore le nombre de piliers de renfort et d'arches les reliant, leur répartition, leur forme, leur dimensionnement.

L'homme du métier ne rencontrera pas de difficulté particulière pour adapter le contenu de la présente divulgation à ses propres besoins et mettre en oeuvre une carrure creuse dépourvue de paroi latérale interne, pour une boite de pièce d'horlogerie, ne répondant que partiellement aux caractéristiques qui viennent d'être décrites, sans toutefois sortir du cadre de la présente invention tel que défini par les revendications.

## Revendications

1. Carrure (1), creuse, pour une boite de pièce d'horlogerie, comportant une paroi externe (2) réalisée d'une seule pièce, concave en forme générale de C, et comprenant une portion centrale, dont la surface externe définit une bande de carrure, ainsi que des portions inférieure et supérieure, définissant un rebord inférieur (4) et un rebord supérieur (6) de la carrure (1), s'étendant tous deux en direction de l'intérieur de cette dernière, et dont au moins l'un définit une ouverture (10) destinée à permettre l'insertion d'un mouvement horloger dans la carrure (1),
**caractérisée en ce que** la carrure (1) comporte une pluralité de piliers de renfort (14) s'étendant entre lesdits rebords inférieur (4) et supérieur (6) et répartis de telle manière que l'essentiel de la surface interne de ladite paroi externe (2) reste accessible depuis l'intérieur de la carrure (1), et
**en ce que** la carrure (1) porte au moins un organe de fixation (12) destiné à permettre l'établissement d'une liaison mécanique entre la carrure (1) et le mouvement horloger.

2. Carrure (1) selon la revendication 1, **caractérisée en ce que** ledit au moins un organe de fixation (12) est également réalisé d'une seule pièce avec ladite paroi externe (2).

3. Carrure (1) selon la revendication 1 ou 2, **caractérisée en ce qu'**entre 25% et 70% des rayons s'étendant dans un plan médian de la carrure (1), depuis son centre vers l'extérieur, présentent une unique intersection avec la carrure (1), située au niveau de ladite portion centrale.

4. Carrure (1) selon l'une des revendications précédentes, **caractérisée en ce que** ladite ouverture (10) est définie par ledit rebord supérieur (6), ledit au moins un organe de fixation (12) s'étendant depuis ledit rebord inférieur (4) en direction de l'intérieur de la carrure (1).

5. Carrure (1) selon la revendication 4, **caractérisée en ce que** ledit rebord supérieur (6) définit une surface de guidage destinée à coopérer avec le mouvement horloger et/ou avec un cadran à proximité ou au niveau de ladite ouverture (10).

6. Carrure (1) selon l'une des revendications précédentes, **caractérisée**
**en ce que** ledit rebord supérieur (6) comprend une surface d'appui s'étendant sensiblement sur 360 degrés et destinée à définir au moins indirectement un appui pour une glace de la boite de pièce d'horlogerie, et
**en ce qu'**au moins une partie desdits piliers de renfort (14) s'étend au moins partiellement en regard de ladite surface d'appui suivant la direction de l'épaisseur de la carrure (1).

7. Carrure (1) selon l'une des revendications précédentes, **caractérisée en ce qu'**elle comporte en outre des organes de fixation d'un bracelet réalisés d'une pièce avec ladite paroi externe (2) et, préférablement, un organe de fixation d'un fond de boite et/ou une surface d'appui pour une lunette.

8. Boite de pièce d'horlogerie comportant une carrure (1) selon l'une des revendications 1 à 7.

9. Pièce d'horlogerie comportant une boite comprenant une carrure (1) selon l'une des revendications 1 à 7, dans laquelle est logé un mouvement horloger.

10. Pièce d'horlogerie selon la revendication 9, dans laquelle ledit mouvement horloger est rendu directement solidaire de ladite carrure (1), sans interposition d'un cercle d'emboitage.

11. Pièce d'horlogerie selon la revendication 9, dans laquelle ledit mouvement horloger est rendu solidaire de ladite carrure (1) par l'intermédiaire d'un cercle d'emboitage, **caractérisée en ce que** ledit cercle d'emboitage remplit une fonction d'assemblage dudit mouvement horloger à ladite carrure (1) sans définir une double butée, directement ou indirectement, pour lesdits rebords inférieur (4) et supérieur (6) suivant la direction de l'épaisseur de ladite carrure (1).

12. Procédé de fabrication d'une carrure (1), pour une boite de pièce d'horlogerie, comprenant les étapes consistant à
a) réaliser un modèle 3D de ladite carrure (1) comprenant une paroi externe (2) et dépourvu de paroi latérale interne, ladite paroi externe (2) étant réalisée d'une seule pièce, concave en forme générale de C, et comprenant une portion centrale, dont la surface externe définit une bande de carrure, ainsi que des portions inférieure et supérieure, définissant un rebord inférieur (4) et un rebord supérieur (6) de la carrure (1), s'étendant tous deux en direction de l'intérieur de cette dernière, et dont au moins l'un définit une ouverture (10) destinée à permettre l'insertion d'un mouvement horloger dans la carrure (1), ledit modèle 3D comportant au moins un organe de fixation (12) destiné à permettre l'établissement d'une liaison mécanique entre la carrure (1) et le mouvement horloger, ainsi qu'une pluralité de piliers de renfort (14) s'étendant entre lesdits rebords inférieur (4) et supérieur (6) et répartis de telle manière que l'essentiel de la surface interne de ladite paroi externe (2) reste accessible depuis l'intérieur de la carrure (1),
b) fabriquer ladite carrure (1) en mettant en oeuvre au moins une opération de fabrication additive,
c) mettre en oeuvre au moins une opération de nettoyage visant à supprimer tout résidu de fabrication aussi bien de ladite surface externe que de ladite surface interne de ladite paroi externe (2) de la carrure (1).

13. Procédé de fabrication selon la revendication 11, **caractérisé en ce que** ladite étape c) comprend au moins une opération de microbillage et, préférablement, au moins une opération de polissage visant à supprimer tout résidu de fabrication éventuel sur lesdites surfaces interne et externe, et/ou une opération de nettoyage par flux de gaz pulsé et/ou par bain à ultrasons.

14. Procédé de fabrication selon la revendication 11 ou 12, lorsque ladite carrure (1) est réalisée en métal, **caractérisé en ce qu'**il comporte une ou plusieurs opérations supplémentaires consistant à appliquer un traitement de finition à ladite carrure obtenue par la mise en oeuvre de l'étape c) pris dans le groupe comprenant le polissage mécanique, par attaque chimique ou par laser, le satinage, le brossage, le sablage, la croissance d'une couche chimique ou électrolytique, un traitement thermique, préférablement de type HIP et/ou de détente et/ou de durcissement.

15. Procédé de fabrication selon l'une des revendications 11 à 14, **caractérisé en ce qu'**il comporte, entre lesdites étapes b) et c), une opération de reprise par usinage ou meulage de la paroi externe (2) de la carrure (1) obtenue par la mise en oeuvre de l'opération de fabrication additive.

16. Procédé de fabrication selon l'une des revendications 11 à 13, lorsque l'étape b) comprend l'utilisation d'un liant, **caractérisé**
**en ce que** ledit modèle conçu à l'étape a) présente des dimensions supérieures aux dimensions finales souhaitées pour ladite carrure (1), et
**en ce que** l'étape b) comporte des opérations de déliantage et de frittage.
